# EUROPÄISCHE PATENTANMELDUNG

(11) **EP 4 589 842 A1**
(43) Veröffentlichungstag der Anmeldung: **23.07.2025**
(21) Anmeldenummer: 24208410.1
(22) Anmeldetag: 23.10.2024
(51) Int. Cl.: H02S 20/22, E04H 4/10, E04H 15/22

(54) **VORRICHTUNG ZUR MONTAGE VON PHOTOVOLTAIK-PANELS AUF TRAGLUFTHALLEN**

(30) Priorität: 25.10.2023 CH 11922023
(71) Anmelder: TECHNIKUS AG, 9490 Vaduz (LI)
(72) Erfinder: Lendenmann, Karl, 8307 Effretikon (CH)
(74) Vertreter: Felber, Josef

(57) **Zusammenfassung**

Die Vorrichtung besteht aus Gliederketten (1-4) aus gelenkig miteinander verbundenen Gliedern (14), an denen oder in denen Rollenwagen längs dieser Gliederketten (1, 2) rollend geführt sind. Diese Rollenwagen für jede Gliederkette (1, 2) sind in Abständen zueinander in Längs- und Rollrichtung mit einer Spanngurte (11) fest verbunden. An diesen Rollenwagen sind Querstreben (5, 6) montiert, welche zwei Rollenwagen von benachbarten Gliederketten (1, 2) miteinander verbinden. An den parallel zueinander verlaufenden Querstreben (5, 6) zwischen Rollenwagen auf gleicher Höhe können ein oder mehrere Photovoltaik-Panels aufgelegt und mit den Querstreben (5, 6) verspannt werden. Für die Montage wird zunächst ein Seil mittels eines Überwurfsystems über die aufgerichtete Traglufthalle geworfen. Damit wird eine Gliederkette (1, 2) und über den Zenit der Traglufthalle gezogen, wonach die Gliederkette (1, 2) satt auf der Aussenmembran der Traglufthalle aufliegt. Weitere Gliederketten werden parallel dazu montiert. Dann wir für jede Gliederkette (1, 2) eine Spanngurte (11) mit daran festgeschraubten Rollenwagen in diese Gliederkette (1, 2) eingezogen. Die Rollenwagen auf gleicher Höhe werden mit Querstreben (5, 6) verbunden.

## Beschreibung

Traglufthallen verbrauchen viel Energie, die Hauptverbraucher sind die Heizung, die Beleuchtung und das Gebläse. Mit Potovoltaik-Technik kann der Stromverbrauch nicht nur reduziert werden, sondern während weiten Teilen des Jahres resultiert ein Überschuss, der ins Netz gespiesen werden kann. Im Winter kann die Energie während einiger Zeit nicht erzeugt werden, jedoch kann für die Druckaufrechterhaltung und die Beleuchtung mehr als die Hälfte selbst produziert werden, vor allem wenn Batteriespeicher für einige Tage zur Verfügung stehen. Wird elektrischer Strom auch für die Heizung, zum Beispiel für eine Wärmpumpe, benötigt, ist die Halle während rund 6 Monaten nicht energieautark. Ohne Heizenergie resultiert pro Winter für eine 85 m x 40 m Halle ein Defizit von ca. 9000 kWh, mit Wärmepumpe ca. 83'000 kWh. Damit wären Traglufthallen mit Benchmark-Technologie, das heisst mit optimaler Wärmeisolierung und mit dem Einsatz von Photovoltaik-Anlagen nicht energieintensiver als fixe Bauten von vergleichbarer Grösse.

Da der Betrieb von Traglufthallen energieintensiv ist, wird hier vorgeschlagen, eine Traglufthalle mit Photovoltaik-Paneln zu bestücken, um einen Teil der Energie, die es zur Stabilhaltung der Traglufthalle bedarf, direkt aus dem Sonnenlicht zu gewinnen und damit substantielle Kosteneinsparungen zu erzielen, und wenn möglich eine Traglufthalle sogar energieautark betreiben zu können. Darin wird auch eine Möglichkeit gesehen, die aktuell restriktive Bewilligungspraxis, so wie diese derzeit etwa in der Schweiz vorherrscht, zu lockern. Die Betrachtung soll die hauptsächlichen Energieverbraucher für den kompletten Hallenbetrieb berücksichtigen - das heisst die Energie für das Gebläse zur Aufrechterhaltung des Innendrucks, sowie die Energie für die Beleuchtung und die Heizung.

Es kommen, da mit der Photovoltaik-Technologie Energie für den gesamten Betrieb erzeugt werden soll, nur energieoptimierte Lösungen infrage, das heisst solche mit LED-Beleuchtungstechnologie, Wärmepumpenheizung, frequenzgesteuerten Gebläsemotoren und mit den besten wärmeisolierenden Hallenmembran-Aufbauten wie etwa gemäss der EP 3 387 199 A1. Eine solche Traglufthalle erzielt U-Werte um 0.5 W/m²K im Vergleich zu herkömmlichen, deren U-Wert zwischen über 1 W/m²K und 1.5 W/m²K liegen. Diese Konstellation mit optimierter Technologie wird sodann mit der Standardtechnologie verglichen. Aus der WO 2017/098043 A1 ist auch ein Streifenfundament für eine Traglufthalle bekannt geworden, welches für die Befestigung der Photovoltaik-Panel ein Rolle spielen kann, wie das im Verlauf der nachfolgenden Beschreibung noch klar wird.

Der Aufbau und Abbau einer Photovoltaik-Anlage auf einer Traglufthalle stellt einige technische und praktische Anforderungen.

Die Aufgabe der vorliegenden Erfindung ist es vor diesem Hintergrund, eine einfach und ohne Kran handhabbare, sichere, dauerhafte, leichte und kostengünstige Montagevorrichtung zur Montage von Photovoltaik-Paneln auf einer aufgerichteten Traglufthalle zu offenbaren.

Diese Aufgabe wird gelöst von einer Vorrichtung zur Montage von Photovoltaik-Panel auf einer Traglufthalle, dadurch gekennzeichnet, dass sie Gliederketten aus gelenkig miteinander verbundenen Gliedern aufweist, an denen oder in denen Rollenwagen längs dieser Gliederketten rollend geführt sind, und welche Rollenwagen für jede Gliederkette in Abständen mit einer Spanngurte verbunden sind, und auf diesen Rollenwagen Querstreben montiert sind, die sich zu einem Rollenwagen einer benachbarten Gliederkette erstrecken, zum Tragen eines oder mehrerer Photovoltaik-Panels.

Mit dieser Vorrichtung ist eine Montage von Photovoltaik-Paneln auf einer aufgerichteten Traglufthalle rasch und einfach zu bewerkstelligen. Die entsprechende Montagetechnik kann von Solar-Montagefirmen einfach beherrscht werden. Die ebenerdige Montage braucht keine übermässigen Sicherheitsaufwände, keinen Gerüstbau, keine ausgebildeten Dachdecker und auch keinen Kran.

In den Figuren wird diese Vorrichtung zur Montage von Photovoltaik-Paneln auf einer aufgerichteten Traglufthalle als beispielsweise Ausführung dargestellt und anhand der Figuren wird diese Vorrichtung genauer beschrieben und ihre Funktion wird erklärt.

Es zeigt:
- Figur 1:: Eine aufgerichtete Traglufthalle mit Anzeige eines Ausschnittes A;
- Figur 2:: Ungefähr den in Figur 1 markierten Ausschnitt A mit drei horizontal verlaufenden Reihen von Photovoltaik-Paneln, die auf insgesamt vier Gliederketten ruhen, bei der Montage und dem Aufziehen über die Traglufthalle, sowie einen markierten Ausschnitt B;
- Figur 3:: Ungefähr den in Figur 2 markierten Ausschnitt B mit den drei ersten Gliederketten und einem ersten Photovoltaik-Panel, oben eingesetzt in die erste Querstrebe zwischen der linken und mittleren Gliederkette;
- Figur 4:: ein einzelnes Glied in Form eines U-Profils zum Erstellen einer Gliederkette;
- Figur 5:: Zwei gelenkig miteinander verbundene Glieder einer Gliederkette in Form von U-Profilen;
- Figur 6:: Die zwei gelenkig miteinander verbundene Glieder einer Gliederkette in Form von U-Profilen, und rechts daneben einen Rollenwagen mit seinen zwei Rollen und den beiden noch nicht montierten Bolzen und einem Lager, sowie der Klemmplatte, die auf den Rollenwagen geschraubt wird;
- Figur 7:: Das Gleiche wie in Figur 6, jedoch in flacherem Winkel gesehen, zum Darstellen des stumpfen Winkels zwischen den zwei aufeinander folgenden Gliedern der Gliederkette;
- Figur 8:: Den Endbereich eines Gliedes und dahinter den Rollenwagen mit seinen zwei Rollen und den beiden noch nicht montierten Bolzen und einem Lager, sowie der Klemmplatte, die auf den Rollenwagen geschraubt wird, in einer vergrösserten Darstellung;
- Figur 9:: Den Endbereich eines Gliedes und dahinter den Rollenwagen, aufgetrennt in alle seine Bestandteile, sowie rechts daneben den Endbereich der über den Rollenwagen zu führenden Spanngurte;
- Figur 10:: Zwei Glieder einer Gliederkette und links davon die Bestandteile eines Rollenwagen sowie den Endbereich der über den Rollenwagen zu führenden Spanngurte;
- Figur 11:: einen Rollenwagen mit der darüber verlaufenden Spanngurte und die Klemmeplatte mit den Schrauben und Muttern zum Verspannen;
- Figur 12:: Zwei Glieder einer Gliederkette mit dem darin eingesetzten und in Längsrichtung geführten Rollenwagen und der darüber verlaufenden Spanngurte sowie der Klemmplatte zum Verschrauben der Spanngurte mit dem Rollenwagen und zum Verankern einer Querstrebe;
- Figur 13:: Zwei parallel zueinander verlaufende Gliederketten mit parallelen sie verbindenden Querstreben;
- Figur 14:: Eine Querstrebe mit einer Halterung für einen Photovoltaik-Panelrahmen;
- Figur 15:: Den Wärmefluss im Innern einer Halle;
- Figur 16:: Den Wärmefluss im Innern einer Halle mit einem Deckenventilator;
- Figur 17:: Die Energiebilanz einer Traglufthalle mit Photovoltaik-Paneln über ein Kalenderjahr dargestellt.

Es gibt Traglufthallen in fast allen Abmessungen von wenigen Metern bis zu Grössen von ca. 80 x >100 m. Die Überlegungen, ob solche Hallen sinnvoll mit Photovoltaik-Anlagen ausgerüstet werden können, wurden anhand einer 4-fach Tennishalle mit den Abmessungen 85 x 40 m angestellt.

In Bezug auf den Energieverbrauchs wurden durch bessere Isolation und mehrschichtigen Membrane sowie insbesondere durch den Einbau von Wärmereflexions-Matten wie in EP 3 387 199 A1 aufgezeigt gegenüber früher grosse Fortschritte gemacht. Früher wurden 1-schichtige Hallen aus geschweissten PVC-Folien gebaut. Deren Wärmeisolation war schlecht und Kondenswasser konnte sich an den Innenflächen bildet. Bald danach wurden 2-Schichtfolien eingesetzt mit K-Werten, die etwas besser waren. Verstärkungen aus Polyester oder mit einer integrierten Eisendrahtkonstruktion wurden integriert. Heute üblich sind Membranen, die innen möglichst keine Kondensatwasserabscheidung haben, in der Mitte mit Polyethylen-Schaumstoff ausgerüstet sind und gegen aussen wird ein witterungsbeständiges und wasserabweisendes Material aus PE oder PVDF eingesetzt.

Mittlerweile sind auch schon 2x2-Membranen mit noch besserem K-Wert vorhanden. Isolationswerte dieser Traglufthallenmaterialien gemäss SIA 380/1, laut Konferenz Kantonaler Energiefachstellen, Empfehlung EN-8 - Beheizte Traglufthallen (Ausgabe Dezember 2007):

| | |
|---|---|
| 2-Schicht-Membrane | 2.70 W/m2 K Standardtechnologie |
| 3-Schicht-Membrane | 1.95 W/m2 K Standardtechnologie |
| 2x2-Schicht-Membrane | 1.10 W/m2 K Standardtechnologie |
| Membran mit integrierten Wärmereflexionsmatten | 0.50 W/m2 K als Benchmark-Technologie |

Eine mit Photovoltaik-Paneln ausgerüstete Traglufthalle hat drei wesentliche Energieverbraucher:

Erstens das Gebläse für das Aufrechterhalten des Innendruckes. Es muss 250-350 Pa Überdruck für die Kompensation der Flächenbelastung durch aufmontierte Photovoltaik-Panel gegenüber der Atmosphäre erbringen. Die Panel messen zum Beispiel: 1660 mm x 830 mm = 1.38 m², das heisst sie haben eine Masse von 17 kg und erzeugen daher eine Flächenbelastung von 12.5 kg/m². Die Montagestruktur in Aluminium (maximal +20%) erbringt eine zusätzliche Flächenbelastung von 2.5 kg/m². Die totale Flächenbelastung beträgt daher nach diesem Beispiel 15 kg/m². Werden an den steilen Flanken Panel angebracht, erhöht sich die Flächenbelastung bei der rein auf der Membran abgestützten Montageart im Verhältnis 1/cos α, verteilt auf die gesamte Fläche, jedoch verringert sich die resultierende Kraft auf die Membran im gleichen Masse wieder. Daraus folgt: Die Steilheit der Membran hat keinen Einfluss auf den Druck, den die Folie auszuhalten hat. Fazit: Der unter normalen Bedingungen aufgebrachte Innendruck der Halle kann das Gewicht der Photovoltaik- Anlage tragen 250 bis 350 Pa entspricht einem Druck von 25 - 35 kg/m². Es muss eher am oberen Druckbereich gefahren werden, jedoch ist bei einseitig südlicher Anbringung der Panelen mit geometrischen Asymmetrien der Halle zu rechnen.

Zweitens die Beleuchtung. Je nach Tätigkeit in der Halle sind andere Beleuchtungen vorgegeben, im Falle einer Tennishalle entspricht dies rund 140 kW Beleuchtungsleistung. Je nach Öffnungszeiten und Aussenbeleuchtung kann im Winterhalbjahr im Durchschnitt mit 7 h und im Sommerhalbjahr mit 3 h täglicher Beleuchtungszeit gerechnet werden. Die Solarpanels schatten generell ab, und lassen auf lichtdurchlässigen Hallendächern weniger Licht herein, somit wird die Beleuchtungsenergie eher leicht höher sein. Mit LED-Technik lässt sich Energie einsparen, eine 4-Feldhalle kann mit 15 kW Leistungsaufnahme spezifikationsgemäss beleuchtet werden.

Drittens die Heizung. Laut Hersteller Poly Slovakia beträgt der Heizenergieverbrauch für eine 4-Feld-Tennishalle mit durchschnittlich 41'000 m³ pro Wintersaison, rund 440'000 kWh. Bei diesem Wert handelt es sich um jenen für eine Halle mit einer 3-Schichtmembran. Der Wert kann gut errechnet werden über die Formel W= U * A * ØAT * Heizperiodenlänge in h = 1.95 W/m²*K x 40 m x 85 m 15 K x 4320 h = ca. 430'000 kWh. Dieser Wert kann massiv verbessert werden, wenn eine Membran mit einem besseren U-Wert verwendet wird. Die jährliche Heizenergie beträgt bei einem U-Wert von 0.5 W/m²K lediglich noch rund 110'000 kWh. Wenn nicht elektrisch geheizt wird, sondern mittels einer Wärmepumpe, kann der Wert je nachdem, ob mit Sonden oder mit einem Luftwärmetauscher gearbeitet wird um das 3 bis 7-fache reduziert werden. Verbessert kann der Wert noch werden mit einer minimalen Belüftung bei Nichtgebrauch und mit dem Einsatz von Wärmetauschern, wenn die spezifizierte Frischluftzufuhr bei Sportbetrieb nötig ist. Die Solarpanels allein geben noch eine weitere, zusätzliche Isolationswirkung. Der Effekt dürfte allerdings nicht massiv sein. Befindet sich in der Traglufthalle zum Beispiel ein Schwimmbad, so ist der Energieeinsatz nochmals massiv höher. Hallen-Schwimmbäder werden normalerweise auf 28° C beheizt, und auch das Wasser muss beheizt werden.

Eine Gesamtbetrachtung des Energie-Verbrauchs und der Energie-Erzeugung zeigt dieses Bild: Annahme: 1/3 der Fläche sind mit Photovoltaik-Panels belegt, auf der Sonnenseite ab 2.5 m Höhe exklusive die Stirnseiten. Üblich ist eine Nennleistung von ca. 200W/m² (peak = bei rechtwinkliger Einstrahlung) In mittleren Breitengraden kann mit einer Jahresproduktion gerechnet werden, die ca. 1000 peak-hrs entspricht. Vorteilhaft bei Traglufthallen ist die gewölbte Oberfläche, dies bricht die Mittagsspitze, da bei verschiedenen Sonnenständen der Winkel von einigen Panels besser ausgerichtet ist. Bei tiefstehender Wintersonne sind die steil angebrachten Panels an den Flanken gut ausgerichtet und erreichen eine optimalere Leistung. Bei einer Photovoltaik-Fläche von 1130 m² (1/3- der Gesamtfläche) entspricht dies 226'000 kWh, die jedoch über das Jahr sehr unterschiedlich anfallen. Im Dezember würden lediglich ca. 4500 kWh geliefert.

Die Sonnenausbeute ist in der nördlichen Hemisphäre während den Wintermonaten wesentlich geringer als im Sommer. Mit den untenstehenden Daten soll abgeschätzt werden, wieviel Energie pro Monat gewonnen werden kann. Dies wiederum soll mit dem Bedarf des Energiebedarfs der Traglufthalle verglichen werden und der Energieüberschuss, sowie das Energiedefizit errechnet werden. Der Photovoltaik-Ertrag pro Monat (Zahlen für Deutschland) sind eher konservativ, da die Schweiz mit ihrer südlicheren Lage bezüglich Sonnenstands bereits etwas ausgeglichenere Jahreszeiten hat.

| **Monat** | **Spez. Ertrag** | **Umrechnung** |
|---|---|---|
| | | |
| Januar | 26 | 5772 |
| Februar | 59 | 13098 |
| März | 72 | 15984 |
| April | 12 | 28416 |
| Mai | 124 | 27528 |
| Juni | 155 | 34410 |
| Juli | 131 | 29082 |
| August | 123 | 27306 |
| September | 89 | 19758 |
| Oktober | 63 | 13986 |
| November | 27 | 5994 |
| Dezember | 21 | 4662 |

Es können diese Abschätzungen gemacht werden:

| | | Standardmaterial | | Benchmark | | PV-Beitrag |
|---|---|---|---|---|---|---|
| | | Anschluss | Verbr./mt | Anschluss | Verbr./Mt. | |
| Sommer Apr-Sept | Gebläse | 11 kW | 7920 kWh | | | 20000-34500 kWh |
| | Licht | 140 kW | 12600 kWh | | | |
| | Heizung | - | - | - | - | |
| Winter | Gebläse | 11 kW | 7920 kWh | | | |
| Okt-März | Licht | 140 kW | 29400 kWH | | | 4500-160000 kWH |
| | Heizung | Gas 41'000 m3, entspricht 440 MWh | 36700 kWh | | | |

Annahmen/Bedingungen für die Rechenbeispiele:
- Beleuchtung eines Tennisplatzes 500 - 750 Lux Beleuchtungsklassen I und II gem. DIN EN 12194
- Der Einfachheit halber wird angenommen, dass die monatliche Sonnenleistung der PV-Leistung entspricht
- Standardtechnologie einer 3-Schicht-Membran Energiewerte von Polyslovakia Hersteller 7, (3-Schicht-Folie entspr. 1.95 W/m² K)
- Benchmark Technologie Gebläse frequenzgesteuert, Vergleich Sporthalle Balsthal, Kanton Solothurn (3-Feldhalle mit ca. 9 kW LED ausgerüstet, auf 4-Feldhalle hochgerechnet und aufgerundet).

Die Hallen müssen rund um die Uhr mit Energie versorgt werden, einerseits ist abzuschätzen, welche Speicherkapazitäten es braucht, um vor allem im Winter den Nachtbetrieb sicherzustellen, aber auch um Perioden ohne Sonnenschein abdecken zu können. Die Abklärungen zeigen, dass die Hallen gänzlich energieautark zu betreiben sind, das heisst, es ist möglich, die Sommerenergie für den Winter zu speichern.

Der Energiebedarf während der Nacht für das Gebläse und die Beleuchtung, jedoch ohne Heizung im Winter, beträgt rund 200kWh. Das ist ein Energiemenge, die in Batteriespeichern geladen werden kann - siehe z.B. Ecocoag AG, CH-Brunnen. Es ist auch denkbar, Perioden von bis zu einer Woche ohne Sonne zu überbrücken mit 6 260 kWh-Batterien von Ecocoach AG. Damit kann die durchschnittliche Winterstromleistung zu > 95% abgerufen werden. Diese Betrachtung setzt eine Heizung voraus, die nicht in der Energiebilanz berücksichtigt werden muss, z.B. mittels Fernwärme. Wird die Heizenergie elektrisch erzeugt, inkl. mittels Wärmepumpe, so ist die Autarkie durch die Photovoltaik-Anlage ein halbes Jahr nicht ausreichend und mit Batteriespeichern nicht zu erreichen, auch wenn über das ganze Jahr betrachtet die Photovoltaik-Anlage mehr elektrischen Strom erzeugt als gebraucht wird. Um die Wintermonate, in denen nicht genügend Strom für die Eigenversorgung durch die Photovoltaik-Anlage zur Verfügung steht zu überbrücken, müsste ein Speicher von ca. 9000 kWh zur Verfügung stehen, wenn nur die Energie für das Gebläse und die Beleuchtung sichergestellt werden müsste (November bis Januar) und ca. 83'000 kWh, um die Wärmepumpe zusätzlich zu betreiben (Oktober bis März). Dies ist mit den heutigen Speichern nicht sinnvoll zu bewerkstelligen.

Die Montage der PV Panels soll einfach sein, aufgrund der nicht fixen Konstruktion kommt ein Gerüst kaum infrage, es kann auf dem Hallendach nicht richtig abgestützt werden. Folgende möglichen Techniken sind denkbar:
1. Arbeiten von mobilen Plattformen / Hebebühnen aus (je nach Hallenbreite sind horizontale Distanzen von > 20 m zu überwinden, Arbeiten ist schwierig, Arbeitsplattform darf nicht verlassen werden.
2. Arbeit am Seil, braucht spezielle Ausbildung, Gefahr des Anhängens in der Montagestruktur beim Traversieren
3. Montage im luftlosen Zustand und Aufblasen der Halle nach der Montage. Gefahr der Verletzung der Membran und Präzision der Montage an der schlaffen Haut ist nicht gegeben.
4. Ebenerdige Montage auf der Sonnenseite und Hochziehen der Konstruktion über Schienen gemäss der vorliegenden Erfindung. In diesem Bericht wird die Methode 4 beschrieben, es scheint, dass diese die einfachste, kostengünstigste und sicherste Methode zu sein, sowohl für Mensch und Material.

Gemäss der vorliegenden Erfindung werden die Panels an Spanngurten hochgezogen, an denen die Aluminiumquerbalken befestigt sind. Dazu werden Gliederketten aus U-Profil oder T-Profil-Schienen aufs Dach gelegt werden, in oder an denen die Gurten auf Rollenwagen laufen. In dieser Weise können die Panels Stück für Stück hochgezogen werden. Die Vorrichtung hierzu wird im Folgenden anhand der Figuren beschrieben und erklärt.

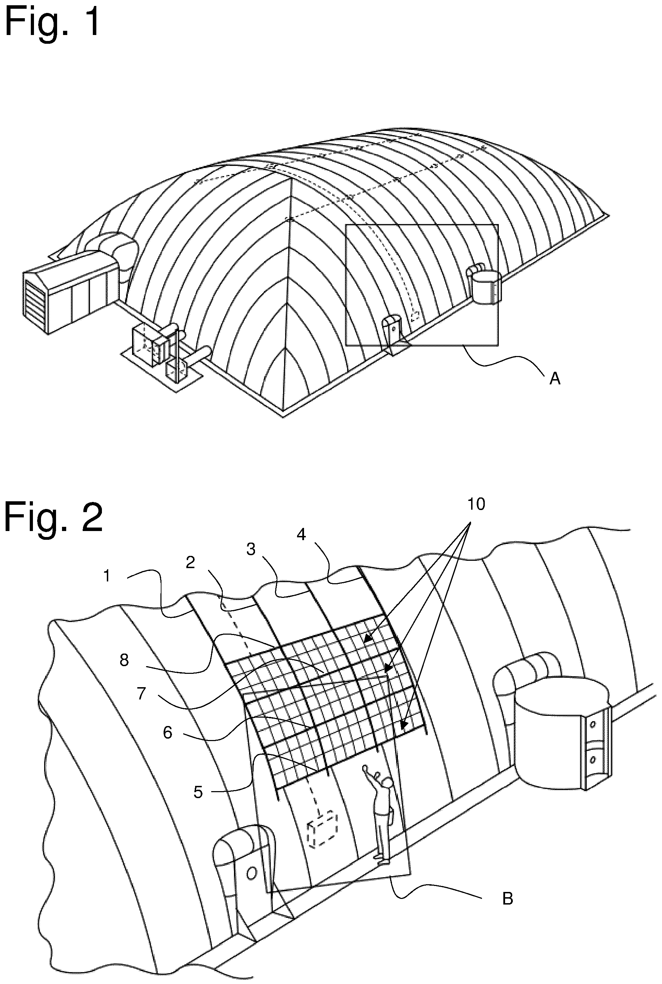

Zunächst zeigt die Figur 1 eine aufgerichtete Traglufthalle mit Anzeige eines Ausschnittes A. Gezeigt ist hier ein Ausschnitt der Längsseite einer Traglufthalle mit zwei Zugängen, wovon der eine, hier der hintere Zugang, als Drehtürschleuse ausgeführt ist.

Die Figur 2 zeigt den in Figur 1 ungefähr markierten Ausschnitt. Es sind hier vier Gliederketten 1, 2, 3, 4 auf der Aussenmembran der Traglufthalle aufliegend angeordnet, auf denen Querstreben 5, 6, 7, 8 befestigt sind, sodass mehrere Rahmen gebildet werden, auf welche dann die Photovoltaik-Panel 10 aufgesetzt und befestigt werden können, und der Monteur und die untersten zwei Reihen von montierten Panels 10 sind mit einer Markierung B angezeigt.

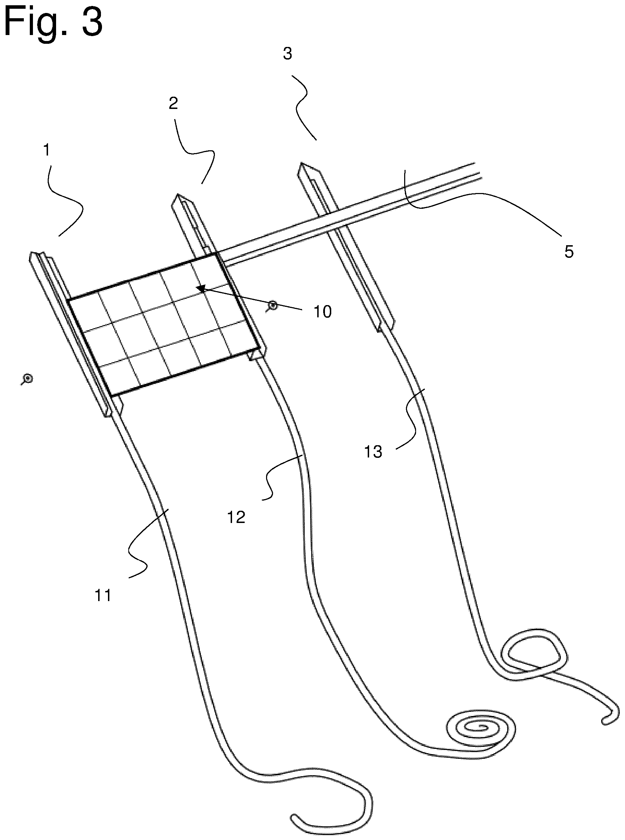

Die Figur 3 zeigt ungefähr den in Figur 2 markierten Ausschnitt B mit den drei ersten Gliederketten 1-3 und einem ersten von Photovoltaik-Panel 10, oben eingesetzt auf die erste Querstrebe 5 zwischen der linken Gliederkette 1 und nächstfolgenden, hier mittleren Gliederkette 2. In den Gliederketten, die vorteilhaft aus U-Profilabschnitten als einzelne miteinander verbundene Glieder ausgeführt sind, mit der offenen Seite nach oben gerichtet, laufen hier nicht einsehbare Rollenwagen. Diese sind in Längsrichtung der Gliederketten 1-4 in oder an denselben geführt. Über die mehreren Rollenwagen einer Gliederkette verläuft eine Spanngurte 11-13, die mit den Rollenwagen fest verbunden ist. Die Rollenwagen tragen dann die Querstreben 5-8 und letztlich die eingesetzten Solarpanels 10.

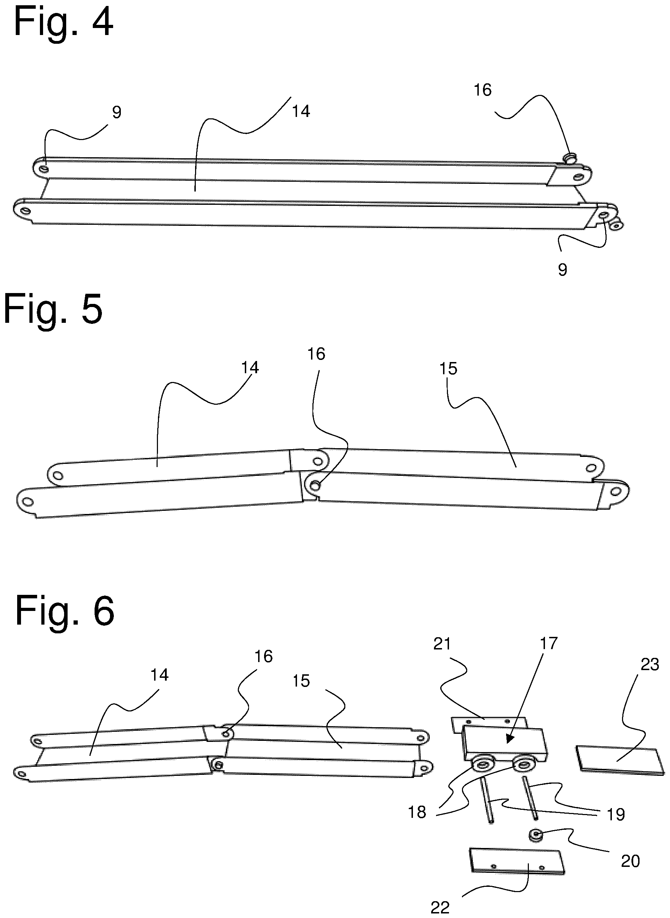

Die Figur 4 zeigt ein einzelnes Glied 14 einer Gliederkette. Dieses Glied 14 besteht hier aus einem U-Profil aus Aluminium, Chromstahl oder Kunststoff. Seine beiden Seitenwände laufen endseitig in abgerundete Ohren 9 aus, die mit einer Bohrung versehen sind. Mittels kurzer Scharnierbolzen 16 in diesen Bohrungen können mehrere solche Glieder 14 zu einer Gliederkette zusammengehängt werden, wobei die Glieder 14 dann zueinander in einem Winkel von ca. 10° gegeneinander auf- und abschwenkbar sind.

Die Figur 5 zeigt zwei gelenkig miteinander verbundene Glieder 14, 15 einer Gliederkette, wobei die Glieder 14, 15 um die Scharnierbolzen 16 jeweils um einen geringen Winkel von bis ca. 10° schwenkbar gelenkig verbunden sind. Damit kann sich eine Gliederkette 1-3 aus einer Vielzahl solcher Glieder 14, 15 an die Wölbung einer Traglufthallen-Membran anpassen und liegt überall annähernd satt auf derselben auf.

Die Figur 6 zeigt die zwei gelenkig miteinander verbundenen Glieder 14, 15 einer Gliederkette in Form von U-Profilen, und rechts daneben einen Rollenwagen 17 mit seinen zwei Rollen 18. Diese Rollen 18 sind an Seitenwänden 21, 23 des Rollenwagens 17 mittels Bolzen 19 gelagert, wobei in die Endbereiche der Rollen 18 spezielle Gleit- oder Roll-Lager 19 eingebaut sind, sodass der Rollwiderstand der Rollen 18 gering gehalten wird. Diese Bolzen 19 und ein einzelnes Lager 20 sind hier noch vor den Rollen 18 am Boden liegend dargestellt. Weiter sieht man eine Klemmplatte 23, die oben auf den Rollenwagen 17 aufgesetzt und darauf verschraubt wird, unter Einklemmens einer Spanngurte, wie das noch gezeigt wird.

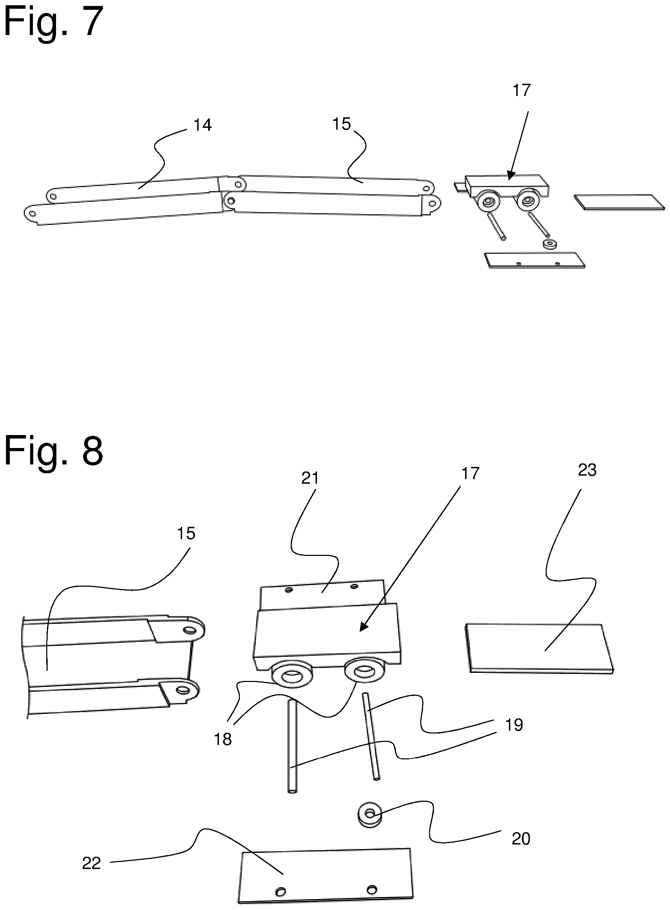

Die Figur 7 zeigt nochmals das Gleiche wie die Figur 6, jedoch in flacherem Winkel gesehen. Hier erkennt man, wie die beiden Glieder 14, 15 des Gliederketten-Ausschnittes zusammen einen stumpfen Winkel einschliessen. Diese Gelenkigkeit gewährleistet, dass die einzelnen Glieder einer Gliederkette, wenn sie über die Wölbung einer Traglufthallen-Aussenmembran gezogen wird, satt auf derselben aufliegen.

Die Figur 8 zeigt links den Endbereich eines Gliedes 15 und dahinter bzw. hier im Bild rechts daneben den Rollenwagen 17 mit seinen zwei Rollen 18 und den beiden noch nicht montierten Bolzen 19 und einem einzelnen Lager 20, sowie eine Klemmplatte 23, die auf den Rollenwagen 17 geschraubt wird, in einer vergrösserten Darstellung. Neben dem Rollenwagen 17 liegen noch dessen beide Seitenwände 21, 22 mit ihren Bohrungen, in welchen die Bolzen 19 gelagert werden.

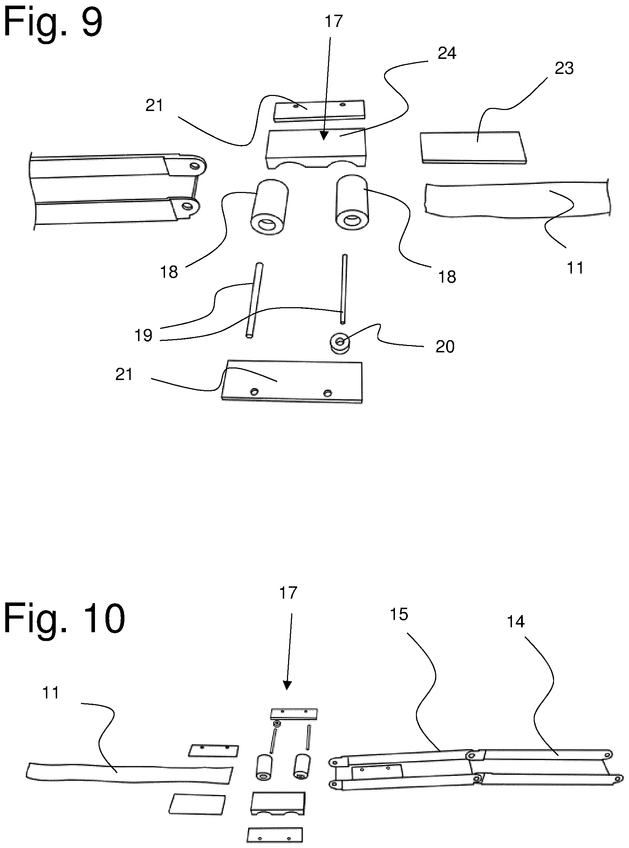

Die Figur 9 zeigt links den Endbereich eines Gliedes 15 und dahinter bzw. im Bild rechts daneben den Rollenwagen 17, aufgetrennt in alle seine Bestandteile. Zu sehen sind also die beiden Seitenwände 21, 22, dann der Rollenwagen-Körper 24, die Rollen 18 mit den zugehörigen Bolzen 19 und ein einzelnes Lager 20, von denen es natürlich für jede Rolle 18 deren zwei gibt, für die beiden Seiten der Rolle 18. Rechts oben im Bild ist die Klemmplatte 23 gezeigt, und darunter das Ende einer Spanngurte 11, die dann mit dieser Klemmplatte 23 auf dem Rollenwagen-Körper 24 verspannt wird.

Die Figur 10 zeigt zwei Glieder 14, 15 einer Gliederkette und links davon die Bestandteile eines Rollenwagens 17 sowie den Endbereich der über den Rollenwagen zu führenden Spanngurte 11, hier im Vergleich zur Figur 9 von der anderen Seite her gesehen.

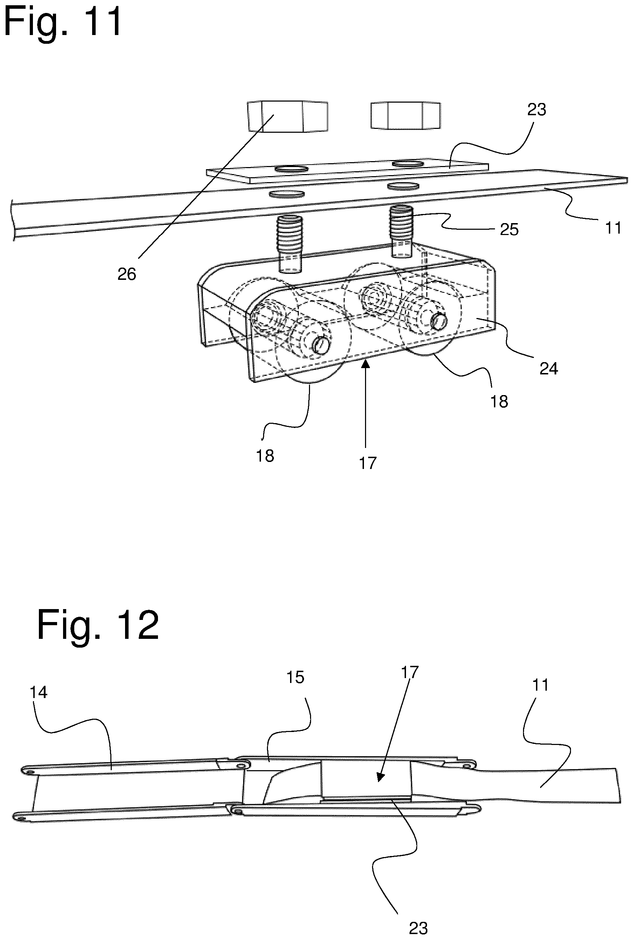

In Figur 11 ist ein Rollenwagen 17 in einer transparenten Zeichnung dargestellt, wie er mit seinen Rollen 18 auf dem Boden des U-Profils eines Gliedes der Gliederkette abrollt. Oberhalb des Rollenwagens 17 verläuft die Spanngurte 11, und diese wird mit der Klemmplatte 23 schliesslich auf die Oberseite des Rollenwagen-Körpers 24 gespannt, mit Hilfe der hier eingezeichneten Gewindestäbe 25 und zugehörigen Gewindemuttern 26.

Die Figur 12 zeigt zwei Glieder 14, 15, die zusammen einen Abschnitt einer Gliederkette bilden und in dieser Gliederkette ist ein Rollenwagen 17 eingesetzt, indem dieser in das U-Profil der Glieder 14, 15 eingesetzt ist und in diesen Gliedern 14, 15 in deren Längsrichtung auf seinen Rollen 18 rollen kann. Er wird dabei von den beiden seitlichen Flügeln der U-Profile geführt. Über den Rollenwagen 17 verläuft eine Spanngurte 11 und diese ist mittels der Klemmplatte 23, die von oben auf den Rollenwagen-Körper 24 geschraubt ist, mit dem Rollenwagen 17 verspannt. Die Spanngurte 11 führt über eine Vielzahl von Rollenwagen 17, die in Längsrichtung voneinander beabstandet sind und oben mit den Gewindestäben 25 für die Befestigung der Spanngurte 11 die Querstreben 5-8 zwischen zwei Gliederketten tragen können. Die beiden Enden der Spanngurte 11 werden schliesslich am Fundament der Traglufthalle oder im Grund verankert.

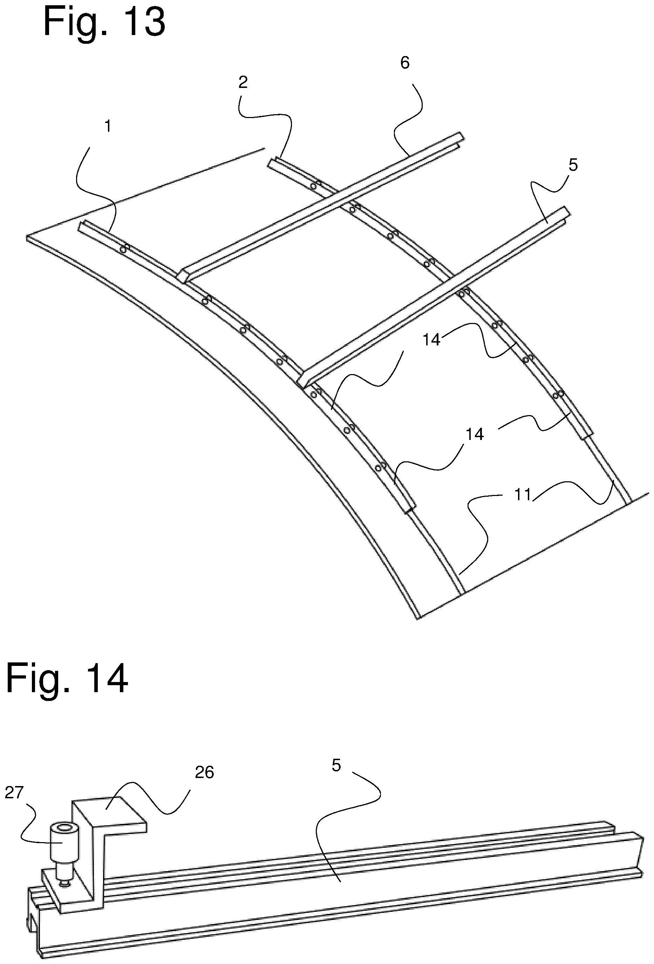

In Figur 13 ist die Situation gezeigt, wenn zwei Gliederketten 1, 2 parallel zueinander und beabstandet voneinander über eine Traglufthallen-Aussenmembran geführt und verlegt sind, und Spanngurten 11 auf den hier nicht sichtbaren Rollenwagen befestigt sind, die in den Gliederketten 1, 2 längs derselben rollend geführt sind. An den Stellen der Rollenwagen 17 sind die Querstreben 5, 6 mit den oben aus denselben herausragenden Gewindestiften 25 verschraubt, die man in Figur 11 sieht.

Wie man anhand von Figur 14 sieht, werden an diesen Querstreben 5 Halterungen 26 festgeschraubt, die zum Verspannen eines aufgelegten Rahmens einer Photovoltaik-Panels dienen, indem diese Halterungen mit Schrauben 27 auf den Querstreben 5 festgeschraubt werden. Die einzelnen Photovoltaik-Panels können alternativ und noch vorteilhafter auch mit einer Klick-Verbindung nach EP 3 882 473 an den Querstreben 5 befestigt werden, was besonders schnell und einfach vonstatten geht. Sie können damit satt nebeneinander und aneinander anliegend montiert werden. Am Schluss wird auf beiden Seiten am äussesten Photovoltaik-Panel ein Rückhaltelement mit der Querstrebe 5 verspannt, damit diese sich nicht seitlich verschieben und aus der Klickverbindung gleiten können. Damit ist klar, wie die Montage vor Ort auf der Zeitachse erfolgt: Zunächst wird eine Kordel oder ein Seil mittels eines Überwurfsystems über die aufgerichtete Traglufthalle geworfen oder geschossen. Am Ende dieses Seils wird eine Gliederkette befestigt und diese wird hernach vom jenseitigen Ende der Kordel oder des Seils auf die Traglufthalle und über ihren Zenit gezogen, bis sie satt auf der Aussenembran der Traglufthalle aufliegt. Mit einer wiederum über den Zenit der Traglufthalle auf die andere Seite geworfenen oder geschossenen Kordel oder Seil wird hernach eine Spanngurte mit daran festgeschraubten Rollenwagen in diese Gliederkette eingezogen, wobei die Rollenwagen 17 so in die Gliederkette eingeführt werden, dass ihre Rollen 18 auf dem Boden der U-Profile der die Gliederkette bildenden Glieder abrollen. In dieser Weise werden mehrere Gliederketten nebeneinander liegend und parallel zueinander auf die Traglufthallen-Aussenmembran verlegt. An den ersten beiden Rollenwagen, die in den beiden Gliederketten 1, 2 einander auf gleicher Höhe gegenüberliegen, wird dann eine Querstrebe 6 montiert. Eine solche Querstrebe 6 kann sich auch über mehrere Gliederketten 1, 2, 3, 4.. erstrecken und sie wird dann mit dem jeweils ersten Rollenwagen 17 in jeder Gliederkette verschraubt. Dann werden die Spanngurten 11 in jeder Gliederkette 1, 2, ... gleichförmig miteinander ein stückweit von der anderen Seite der Traglufthalle her hochgezogen, bis ein weiterer Rollenwagen 17 an den Spanngurten 11 in die Gliederketten 1, 2, ... einfährt. Das Hochziehen kann auch von derselben Seite der Traglufthalle erfolgen, indem auf der anderen Seite die Spanngurten 11 um je eine Umlenkrolle führen, die im Grund verankert ist. Dann können die Spanngurten 11 von der Umlenkrolle zurück an die Seite der Traglufthalle geführt werden, wo die Montage erfolgt und können dort mittels einer Winde nach und nach weiter gezogen werden, wodurch die installierten horizontalen Reihen von Photovoltaik-Panels nach und nach jewesil um eine Reihenhöhe nach oben gezogen werden können. Diese zweite Reihe von Rollenwagen 17 wird in gleicher Wiese mit einer weiteren Querstrebe 5 verbunden. Schliesslich wird die Situation erreicht wie in Figur 13 dargestellt. An den Querstreben werden Halterungen 26 festgeschraubt und nun kann ein Solarpanel auf die Querstreben 5, 6 aufgelegt und mit den Halterungen 26 mit denselben verspannt werden. Dann werden die Spanngurte 11 mit ihren Rollenwagen 17 in den Gliederketten ein stückweit weiter nach oben gezogen, sodass weitere Querstreben montiert werden können, und weitere Solarpanels aufgesetzt werden können, bis eine durchgehende Fläche von Solarpanels errichtet ist. Die Solarpanels werden elektrisch zusammengeschaltet und über einen Wechselrichter an die Verbraucher angeschlossen. Die Überschussleistung kann ins Netz eingespeist werden oder vor dem Wechselrichter zu einer Speicherbatterie geführt werden.

An dieser Stelle sei erwähnt, dass anstelle von Gliedern in Form von U-Profilen auch solche aus T-Profilen einsetzbar sind. Die mittig senkrecht am Flachteil aufragende Rippe weist dann an beiden Enden ein in ihrer Längsrichtung die Rippe etwas überragendes Ohr mit einer Bohrung auf, sodass diese Glieder mit Scharnierbolzen gelenkig miteinander verbunden werden können. Wenn solche miteinander zu einer Gliederkette verbundene Glieder mit ihrem Rücken auf die Aussenmembran der Traglufthalle aufgelegt werden, so ragen ihre Rippen senkrecht nach oben und auf diesen Rippen können dann Rollenwagen mit geteilten Rollen geführt werden, wobei die beiden Rollen auf den beiden Seiten der Rippe auf den beiden Flügeln der T-Profile abrollen. Diese Rollenwagen sind dann gleichermassen oben mit einer sie verbindenden Spanngurte verbunden und auf sie können Querstreben montiert werden.

Für die Montage der Solarpanels werden am Schluss die beiden Enden jeder Spanngurte 11 am Fundament der Traglufthalle oder direkt im Grund verankert. Ein für die Verankerung geeignetes Fundament geht zum Beispiel aus der WO2017/098043 A1 hervor. Dieses Fundament wird als Streifenfundament erstellt, welches sich rundum um eine Traglufthalle erstreckt. Es besteht aus vorfabrizierten Beton-Streifenfundament-Elementen, und dieses weisen eine Ankerschiene auf, mit einem Keder-Verbindungsprofil mit Keder-Fassungsprofil, sodass die Spanngurten, wenn mit einem endseitigen Keder ausgerüstet sind, an diesen Ankerschienen lösbar befestigbar und mittels Spanngurt-Ratschen spannbar sind. Für eine Verankerung der Spanngurten könne auch Bodenanker eingesetzt werden, an welche die Spanngurten abgespannt werden können.

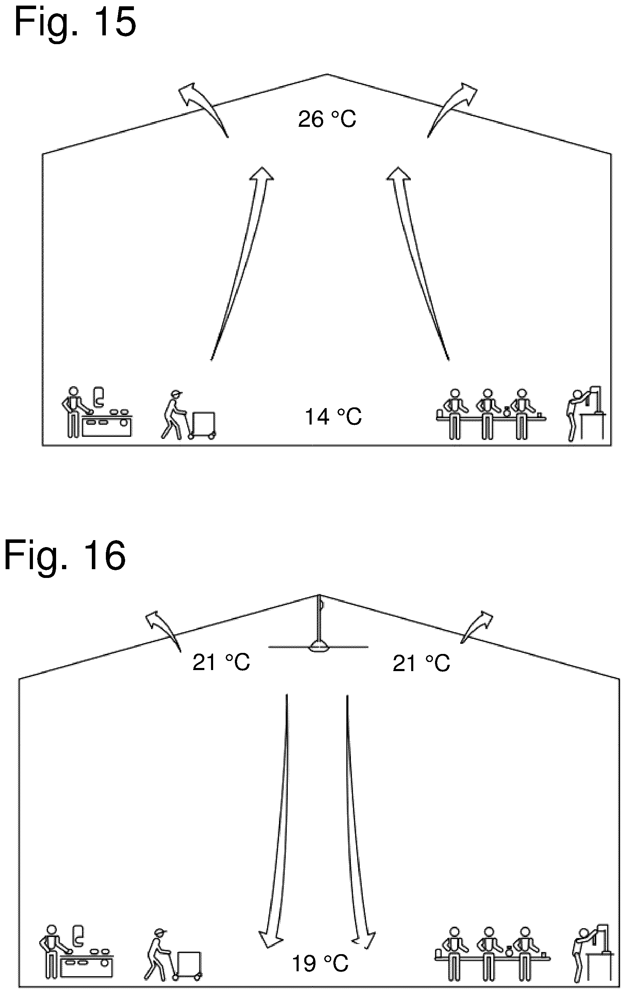

In Figur 15 ist noch der Wärmefluss im Innern einer Halle dargestellt. Die warme Luft steigt nach oben und sammelt sich unter der Decke, während sich bei einer hohen Halle am Hallenboden eine kühlere Temperatur einstellt. Wenn wie in Figur 16 dargestellt Deckenventilatoren montiert werden und vorzugswiese mit Strom von den Photovoltaik-Paneln betrieben werden, so können diese die Innenluft umwälzen und nach unten befördern, sodass ein Temperaturausgleich erzielt wird und die Heizung damit unterstützt wird und am Hallenboden eine höhere Temperatur erzielt wird.

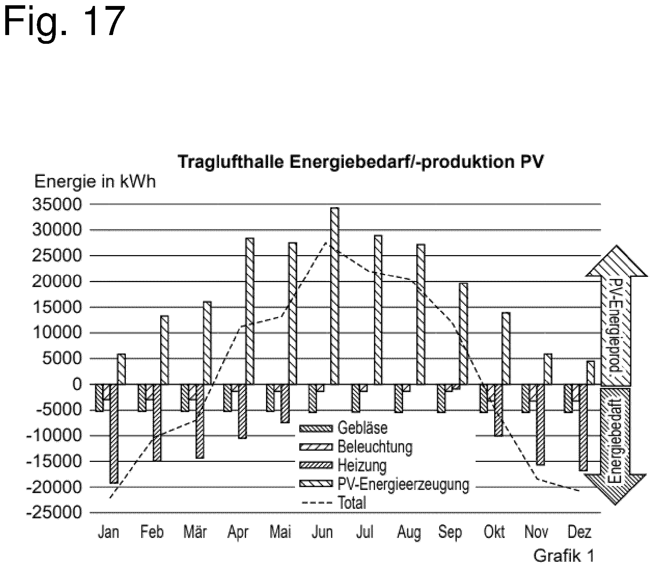

Die Figur 17 zeigt die Energiebilanz einer Traglufthalle mit solchermassen montierten Photovoltaik-Paneln auf ihrer Aussenmembran über ein Kalenderjahr dar. Die nach oben zeigenden Balken zeigen die Energieproduktion an, und die nach unten zeigenden Pakete je von 3 Balken zeigen den Energiebedarf an, nämlich mit dem Balken links für das Gebläse zur Stabilisierung der Traglufthalle, dem Balken in der Mitte für die Beleuchtung und dem Balken rechts für die Heizung.

Es zeigt sich, dass der Energieverbrauch von Traglufthallen mit Standardtechnologie wirklich hoch ist und mit PV-Technologie auf dem Hallendach nicht gedeckt werden kann, vor allem im Winter nicht. Es ist mit Solartechnologie und zusammen mit einer einer Benchmark-Technologie für die Traglufhalle im Sommer ein Energieüberschuss erzeugbar, der ins Netz eingespeist werden kann, und im Winterhalbjahr liefern die Photovoltaik-Panel einen guten Deckungsbeitrag zu den Hauptenergieverbrauchern. Wenn bei der Heizung - im Winter der Hauptenergieverbraucher - andere als elektrische Energie verwendet wird, kann ausser während den drei kältesten Wintermonaten die Traglufthalle energieautark betrieben werden und der zusätzliche Energieeinsatz ist dann sehr gering. Benchmark-Technologie heisst, eine Traglufthalle mit einer Membran, die einen K-Wert von 0.5 W/Km² oder kleiner bietet, und deren Gebläsemotoren frequenzgesteuert betrieben werden und die Beleuchtung mittels effizienten LED erfolgt.

Diese hier vorgestellte Montage von Photovoltaik-Panels eignet sich nicht für alle Baumuster von Traglufthallen gleichermassen. Sie eignet sich vorzugsweise für solche, die über einen grossen Bereich tonnenförmig sind.

Je nach geographischer Lage der Halle und konstruktiven Details kann eine grössere Fläche als der angenommene Drittel mit Panels ausgestattet werden. Alle diese Berechnungen und Überlegungen basieren auf einem Beispiel einer Tennishalle mit 4 Spielfeldern mit dem durchschnittlichen Sonnenstand der CH (Zürich) und den hiesigen Heizgradtage, andernorts kann dies zu andern Ergebnissen führen.

Um das zusätzliche Photovoltaik-Anlagengewicht auszugleichen, muss die Halle eher zum höheren Drucktoleranzwert aufgepumpt werden 300 bis 350 Pa, anstelle von 250-350 Pa, dies bedarf ebenfalls einer etwas höheren Energie.

Die Halle ist durch die Panels an der Sonnenseite abgeschattet und ist im Sommer dadurch etwas kühler (die Hallenhaut ist meist transluscent), im Winter bedarf es eher einer längeren Lichteinschaltdauer. Jedoch wenn die Sonne scheint, kann PV-Energie geerntet werden, und wenn die Sonne nicht scheint ist es kein Nachteil. Ohnehin ist die Beleuchtungsenergie im Winter nicht verloren, die wandelt sich in Wärme um, es wird geringfügig weniger Heizenergie gebraucht.

Da die Panels auf unterschiedlich geneigten Flächen angebracht werden, ist die Elektrizitäts-Produktionsspitze gebrochen - ein erwünschter Effekt, denn die Sonneneinstrahlung ist nicht für alle Panels gleichzeitig optimal.

Schwimmbäder werden normalerweise auf 28°C Lufttemperatur geheizt, und durch die höhere Luftfeuchtigkeit. Ist der Wärmeübergang an der Hallenhaut grösser, insgesamt wird hier sehr viel mehr Energie benötigt.

Insgesamt macht es sehr viel Sinn, ökologisch wie auch ökonomisch, Traglufthallen mit Solarmodulen aus-, resp. nachzurüsten. Traglufthallen verbrauchen viel Energie für die Beheizung, das Gebläse und die Beleuchtung. Neueste Dachmaterialien bringen den Energieverbrauch zwar in die Nähe von fixen Bauten, sämtliche ältere Hallen sind aber vor allem in der Isolationswirkung noch sehr weit davon entfernt. Die erzeugte Photovoltaik-Energie, bei Annahme einer gut isolierenden Dachhaut und Standardtechnologie beim Gebläse und der Beleuchtung und einer Elektroheizung ohne Wärmepumpe, ergibt etwa die benötigte Energie für die Halle, jedoch kann im Sommer Überschussenergie generiert werden, im Winter ist Fremdenergie notwendig. Die Montage der Photovoltaik-Panel auf einer Traglufthalle ist einfach zu bewerkstelligen, die Kosten bleiben sich aber etwa gleich wie auf Hausdächern, da die Konstruktion etwas anspruchsvoller ist, und eine grössere Speicherbatterie nötig ist.

So wie die Hallen flexibel einsetzbar sind, das heisst schnell auf- und abgebaut sind, so ist es auch mit der Solaranlage auf einem Traglufthallendach. Der Auf- und Abbau ist schnell zu bewerkstelligen. Es braucht dazu kein Gerüst und auch keinen Kran für den Materialtransport, und auch keine Leute mit Dachdeckerausbildung.

Wie es mit dem Energieverbrauch, resp. die Entlastung durch eine Photovoltaik-Anlage bei einer Traglufthalle im Einzelfall aussieht, muss von Fall zu Fall abgeklärt werden, es gibt starke Einflussfaktoren, wie beispielsweise die eingesetzte Technologie bei den Stromhauptverbrauchern, das Klima, die benötigte Innentemperatur, und ob die Halle als Schwimmbad oder bloss als Lagerhalle eingesetzt wird.

Eine Photovoltaik-Anlage lohnt sich in jedem Fall, jedoch ist es noch lohnender und kostengünstiger, wenn im Falle einer Dachhaut mit schlechter Isolationswirkung diese mit einer Membran mit Wärmereflexions-Matten ersetzt wird. Das steigert die gesamte Energiebilanz zusammen mit einer Photovoltaik-Anlage sehr entscheidend.

## Patentansprüche

1. Vorrichtung zur Montage von Photovoltaik-Panel (10) auf einer Traglufthalle, **dadurch gekennzeichnet, dass** sie Gliederketten (1-4) aus gelenkig miteinander verbundenen Gliedern (14,15) aufweist, an denen oder in denen Rollenwagen (17) längs dieser Gliederketten (1-4) rollend geführt sind, und welche Rollenwagen (17) für jede Gliederkette (1-4) in Abständen mit einer Spanngurte verbunden sind, und auf diesen Rollenwagen (17) Querstreben montiert sind, die sich zu einem Rollenwagen (17) einer benachbarten Gliederkette (1-4) erstrecken, zum Tragen eines oder mehrerer Photovoltaik-Panels (10).

2. Vorrichtung nach Anspruch 1, **dadurch gekennzeichnet, dass** die Glieder (14, 15) der Gliederketten (1-4) als U-Profile aus Aluminium, Chromstahl oder Kunststoff ausgeführt sind und mit ihren Flachseiten auf der Traglufthallen-Aussenmembran aufliegen und ihre gegenüberliegende offene Seite nach aussen zeigt, wobei die Rollenwagen (17) im Innern der U-Profile auf deren Boden abrollen.

3. Vorrichtung nach Anspruch 1, **dadurch gekennzeichnet, dass** die Glieder (14, 15) der Gliederketten (1-4) als T-Profile aus Aluminium, Chromstahl oder Kunststoff ausgeführt sind und mit ihren äusseren Flachseiten auf der Traglufthallen-Aussenmembran aufliegen und ihre gegenüberliegenden Rippen nach aussen zeigen, wobei die Rollenwagen (17) Rollenpaare aufweisen und an diesen Rippen geführt sind und die beiden Rollen der Rollenpaare auf den Flügeln der T-Profile abrollen.

4. Vorrichtung nach einem der vorangehenden Ansprüche, **dadurch gekennzeichnet, dass** die Rollenwagen (19) mit Gewindestiften (25) ausgerüstet sind, und die Spanngurten (11) mittels einer Klemmplatte (23) auf die Rollenwagen-Körper (24) verspannt sind, und die Querstreben (5, 6) mit diesen Gewindestiften (25) verschraubt sind.

5. Vorrichtung nach einem der vorangehenden Ansprüche, **dadurch gekennzeichnet, dass** die Rollenwagen (19) in einer Gliederkette (1,-4) mit einer Spanngurte (11) verbunden sind und diese Spanngurte mit beiden Enden im Bereich der unteren Ränder der auszurüstenden Traglufthalle mit deren Fundament oder mit dem Untergrund verspannt sind.

6. Vorrichtung nach einem der vorangehenden Ansprüche, **dadurch gekennzeichnet, dass** die Rollenwagen (17) mit der sie verbindenden verbunden ist, indem eine Klemmplatte (23) die Spanngurte (11) auf dem Rollenwagen-Körper (24) mittels einer Verschraubung verspannt.

7. Vorrichtung nach einem der vorangehenden Ansprüche, **dadurch gekennzeichnet, dass** die Rollenwagen (17) einer Gliederkette (1-4) mit den Rollenwagen (17) einer oder mehrere benachbarter Gliederketten (1-4) auf gleicher Höhe mittels Aufschrauben von Querstreben (5-8) verbunden sind.

8. Vorrichtung nach einem der vorangehenden Ansprüche, **dadurch gekennzeichnet, dass** auf die Querstreben (5-8) Halterungen (26) mittels Schrauben (27) befestigt sind, zum Verspannen von Rahmen von Photovoltaik-Panels (10) oder deren Rahmen.

9. Vorrichtung nach einem der Ansprüche 1 bis 7, **dadurch gekennzeichnet, dass** die Photovoltaik-Panels (10) oder deren Rahmen mittels Klick-Verbindungen an den Querstreben (5-8) befestigt sind.

10. Vorrichtung nach einem der Ansprüche 1 bis 7, **dadurch gekennzeichnet, dass** die Photovoltaik-Panels (10) oder deren Rahmen mittels Klick-Verbindungen an den Querstreben (5-8) befestigt, wobei sie nebeneinander satt aneinander anstossend verlegt sind und auf beiden Seiten an den letzten Photovoltaik-Panels (10) Rückhalte-Elemente an den Querstreben (5-8) verspannt sind, sodass sich die Photovoltaik-Panels (10) nicht seitlich verschieben können.
